# EUROPEAN PATENT APPLICATION

(11) **EP 4 422 257 A1**
(43) Date of publication of application: **28.08.2024**
(21) Application number: 22883294.5
(22) Date of filing: 22.09.2022
(51) Int. Cl.: H04W 24/10, H04W 72/0457, H04W 72/20, H04W 72/1268

(54) **TERMINAL AND COMMUNICATION METHOD**

(30) Priority: 19.10.2021 JP 2021170988
(71) Applicant: NTT DOCOMO, INC., Chiyoda-ku Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/035387
(87) International publication number: WO 2023/067984

(57) **Abstract**

A terminal includes a control unit configured to determine a CSI report to be transmitted, based on an order to be applied to carrier switching that is to be applied to a channel carrying uplink control information, among respective CSI (Channel State Information) reports in a plurality of cells, and to determine a cell for transmitting the determined CSI report; and a transmission unit configured to transmit the determined CSI report in the determined cell.

## Description

### FIELD OF THE INVENTION

The present invention relates to a terminal and a communication method in a wireless communication system.

### BACKGROUND OF THE INVENTION

In 3GPP (registered trademark) (3rd Generation Partnership Project), in order to realize even larger system capacity, even faster data transmission speed, even lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., non-patent document 1).

Furthermore, in the 3GPP standardization, PUCCH (Physical Uplink Control Channel) carrier switching is being discussed for the extension of URLLC (Ultra-Reliable and Low Latency Communications) technology. The PUCCH carrier switching has been discussed as a method of reducing the latency of HARQ-ACK (Hybrid Automatic Repeat reQuest-ACKnowledgement) feedback in the TDD (Time Division Duplex) scheme (e.g., non-patent document 2).

### Citation List

### Non-Patent Document

Non-Patent Document 1: 3GPP TS 38.300 V16.6.0 (2021-06)
Non-Patent Document 2: 3GPP TSG RAN Meeting #88e, RP-201310, Electronic meeting, June 29-July 3, 2020

### SUMMARY OF THE INVENTION

### TECHNICAL PROBLEM

For example, in a case where a CSI (Channel State Information) report is configured in multiple PUCCH cells, it is necessary to determine which of the multiple CSI reports is to be transmitted via which PUCCH cell, and to determine how it is transmitted, depending on the configuration related to PUCCH carrier switching.

The present invention has been made in view of the above points and is intended to clarify a procedure of reporting CSI (Channel State Information) in a wireless communication system.

### SOLUTION TO PROBLEM

According to the disclosed technique, a terminal is provided. The terminal includes: a control unit configured to determine a CSI report to be transmitted, based on an order to be applied to carrier switching that is to be applied to a channel carrying uplink control information, among respective CSI (Channel State Information) reports in a plurality of cells, and to determine a cell for transmitting the determined CSI report; and a transmission unit configured to transmit the determined CSI report in the determined cell.

### ADVANTAGEOUS EFFECTS OF INVENTION

According to the disclosed technique, it is possible to clarify a procedure of reporting CSI (Channel State Information) in a wireless communication system.

### BRIEF DESCRIPTION OF THE DRAWINGS

[Fig. 1] is a drawing illustrating an example (1) of a wireless communication system according to an embodiment of the present invention.
[Fig. 2] is a drawing illustrating an example (2) of a wireless communication system according to an embodiment of the present invention.
[Fig. 3] is a drawing illustrating an example (1) of PUCCH carrier switching.
[Fig. 4] is a drawing illustrating an example (2) of PUCCH carrier switching.
[Fig. 5] is a flowchart illustrating an example (1) of a CSI report in an embodiment of the present invention.
[Fig. 6] is a drawing illustrating an example (2) of a CSI report according to an embodiment of the present invention.
[Fig. 7] is a flowchart illustrating an example (3) of a CSI report in an embodiment of the present invention.
[Fig. 8] is a drawing illustrating an example (4) of a CSI report according to an embodiment of the present invention.
[Fig. 9] is a drawing illustrating an example (5) of a CSI report according to an embodiment of the present invention.
[Fig. 10] is a drawing illustrating an example (6) of a CSI report according to an embodiment of the present invention.
[Fig. 11] is a drawing illustrating an example (7) of a CSI report according to an embodiment of the present invention.
[Fig. 12] is a flowchart illustrating an example (8) of a CSI report in an embodiment of the present invention.
[Fig. 13] is a flowchart illustrating an example (9) of a CSI report in an embodiment of the present invention.
[Fig. 14] is a drawing illustrating an example of a functional structure of a base station 10 according to an embodiment of the present invention.
[Fig. 15] is a drawing illustrating an example of a functional structure of a terminal 20 according to an embodiment of the present invention.
[Fig. 16] is a drawing illustrating an example of a hardware structure of the base station 10 or the terminal 20 according to an embodiment of the present invention.
[Fig. 17] is a drawing illustrating an example of a structure of a vehicle 2001 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but not limited to, conventional NR or LTE, for example.

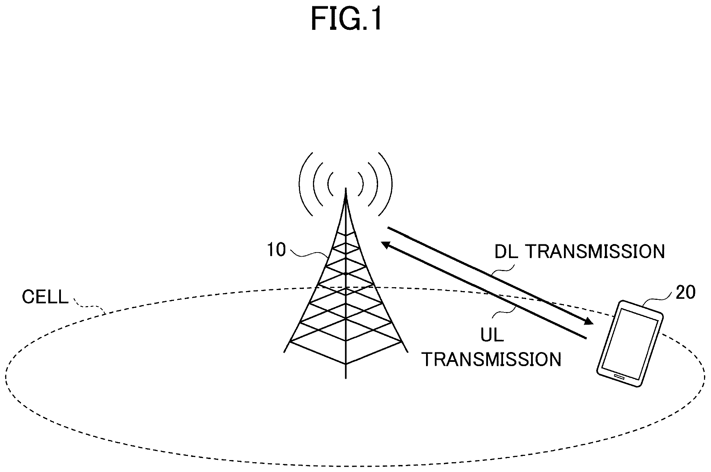

Fig. 1 is a drawing illustrating an example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, or the TTI may be a subframe.

The base station 10 can perform carrier aggregation to communicate with the terminal 20 by bundling a plurality of cells (multiple CCs (component carriers)). One PCell (primary cell) and one or more SCells (secondary cells) are used in the carrier aggregation.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication device that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

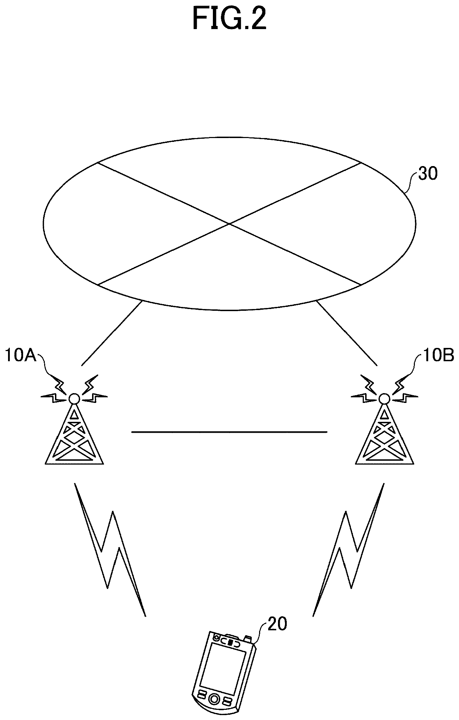

Fig. 2 is a drawing illustrating an example (2) of a wireless communication system according to an embodiment of the present invention. Fig. 2 illustrates an example of a configuration of a wireless communication system in a case where dual connectivity (DC) is performed. As shown in Fig. 2, a base station 10A serving as a Master Node (MN) and a base station 10B serving as a Secondary Node (SN) are provided. The base station 10A and the base station 10B are each connected to a core network 30. The terminal 20 is enabled to communicate with both the base station 10A and the base station 10B.

A cell group provided by the base station 10A serving as an MN is called a Master Cell Group (MCG), and a cell group provided by the base station 10B serving as an SN is called a Secondary Cell Group (SCG). In addition, in the dual connectivity, the MCG is composed of one PCell and zero or more SCells, and the SCG is composed of one PSCell (Primary SCG Cell) and zero or more SCells.

The dual connectivity may be a communication method using two communication standards, and any communication standards may be combined. For example, the combination may be NR and 6G standards, or may be LTE and 6G standards. In addition, the dual connectivity may be a communication method using three or more communication standards and may be referred to as another name different from the dual connectivity.

Processing operations in this embodiment may be performed in a system configuration shown in FIG. 1, in a system configuration shown in FIG. 2, or in other system configurations.

In the 3GPP (Registered Trademark) standardization, supporting the enhanced IoT (Internet of Things) and URLLC (Ultra-Reliable and Low Latency Communication) in NR has been discussed. In addition, enhancement of HARQ-ACK feedback is being discussed to address URLLC requirements.

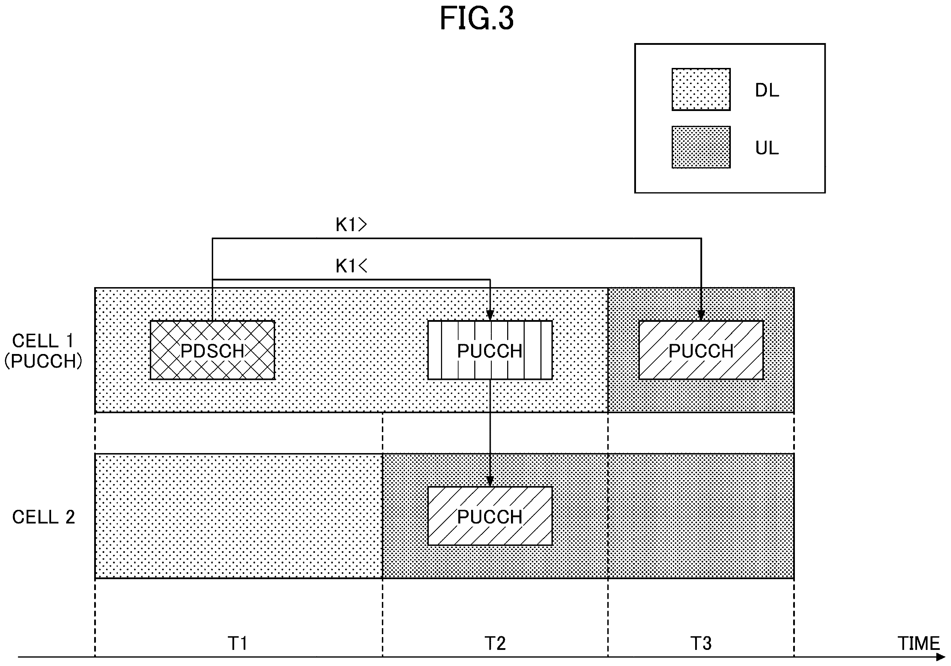

Fig. 3 is a drawing illustrating an example (1) of PUCCH carrier switching. The PUCCH carrier switching has been discussed for HARQ feedback. As illustrated in Fig. 3, in the cell 1 in which the PUCCH is transmitted, when HARQ-ACK corresponding to PDSCH at the timing T1 is to be transmitted on the PUCCH at the timing T2 that is less than K1 value, the HARQ-ACK cannot be transmitted because the timing T2 in the cell 1 is for DL, and the timing T3 for UL in the cell 1 exceeds the K1 value. Therefore, the PUCCH is transmitted via the cell 2 whose timing T2 is for UL. Note that the K1 value may be a parameter indicating the timing from the PDSCH to the HARQ feedback.

For example, Intra-UE multiplexing of UCI (Uplink Control Information) including HARQ-ACK may be performed before cancellation of a UL channel due to collision with a semi-static DL symbol, an SSB (SS/PBCH block) symbol, and an SFI (Slot Format Indication).

Here, when the PUCCH carrier switching is supported based on the semi-static configuration and the terminal 20 determines the PUCCH carrier based on the predetermined rule with a condition of colliding with an invalid symbol, the execution order of the PUCCH carrier switching and the intra-UE multiplexing may affect the UL transmission result.

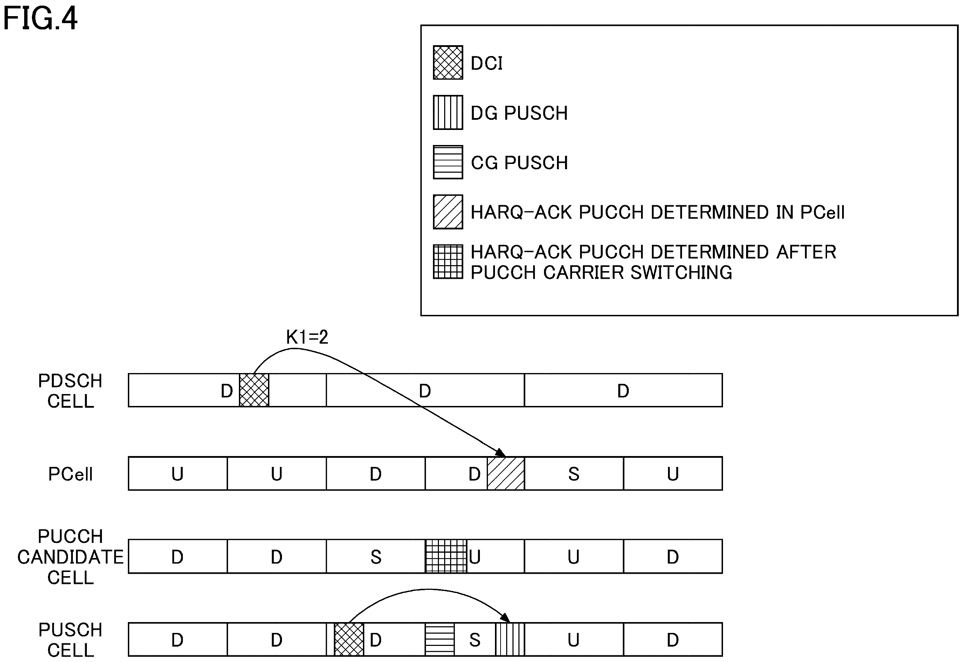

Fig. 4 is a drawing illustrating an example (2) of PUCCH carrier switching. In a case where the intra-UE multiplexing is performed prior to the PUCCH carrier switching, in the example of Fig. 4, HARQ-ACK is transmitted in DG (Dynamic grant) - PUSCH in the PUSCH cell. On the other hand, in a case where the PUCCH carrier switching is performed prior to the intra-UE multiplexing, in the example of Fig. 4, the HARQ-ACK is determined to be transmitted in the PUCCH of the PUCCH candidate cell, and further, according to the intra-UE multiplexing, the HARQ-ACK is transmitted in a CG (Configured grant) - PUSCH via the PUSCH cell.

With respect to the PUCCH carrier switching, the following methods 1) to 3) may be applied.

Method 1) PUCCH carrier switching is performed based on dynamic indication by DCI. Hereinafter, this PUCCH carrier switching is also referred to as dynamic PUCCH carrier switching.
Method 2) PUCCH carrier switching is performed according to a predetermined semi-static rule. Hereinafter, this PUCCH carrier switching is also referred to as semi-static PUCCH carrier switching.
Method 3) PUCCH carrier switching is performed based on a PUCCH cell timing pattern configured by RRC in an applicable PUCCH cell.

Note that both the method 1 and the method 2 may be performed, or both the method 1 and the method 3 may be performed.

Note that the PUCCH carrier switching may be configured for each UL-BWP (Bandwidth Part). That is, the PUCCH carrier switching may be configured for each UL-BWP in a candidate cell. For example, the PUCCH carrier switching may be configured by an information element, pucch-Config/PUCCH-ConfigurationList.

In addition, in a case where an information element, multi-CSI-PUCCH-ResourceList is not configured or in a case where PUCCH resources for transmitting CSI reports are not overlapped with each other in a slot, the UE may transmit up to two non-overlapped CSI reports in the slot and may use at least one PUCCH format 2. Note that the information element, multi-CSI-PUCCH-ResourceList may be information indicating a list of PUCCH resources for transmitting the CSI report.

Also, in a case where the information element, multi-CSI-PUCCH-ResourceList is configured and where multiple PUCCH resources are overlapped with each other, the UE may multiplex all CSI reports into a resource selected from a group of resources specified by the multi-CSI-PUCCH-ResourceList. That is, the UE may multiplex all CSI reports to the slot of the CSI PUCCH.

Here, in a case where CSI reports are configured in multiple PUCCH cells, it is necessary to clarify in more detail the points shown in 1)-3) below regarding the method of transmitting CSI reports.

1) Whether semi-static PUCCH carrier switching is configured.
2) Whether PUCCHs for reporting multiple CSIs in different cells overlap with each other.
3) Whether PUCCHs for reporting CSIs in different cells are to be multiplexed.

Hereinafter, a case will be described in which CSI reporting is configured in multiple PUCCH cells and PUCCH carrier switching is configured.

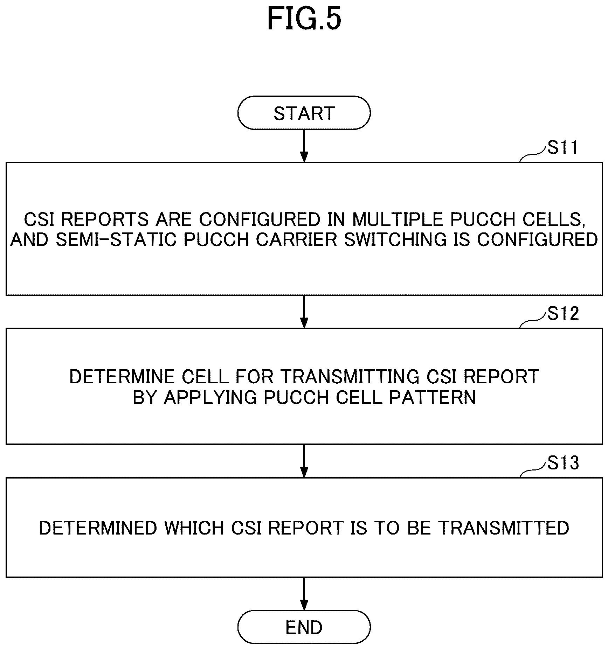

Fig. 5 is a flowchart illustrating an example (1) of a CSI report in an embodiment of the present invention. In step S11, in the terminal 20, CSI reporting is configured in multiple PUCCH cells and semi-static PUCCH carrier switching is configured. In subsequent step S12, the terminal 20 applies the PUCCH cell pattern to determine a cell for transmitting the CSI report. In subsequent step S13, the terminal 20 determines which CSI report is to be transmitted. That is, the PUCCH cell pattern may be applied first to determine which CSI report is to be transmitted. Note that, hereafter, "not transmitted" and "dropped" may be replaced with each other.

For example, in a case where PUCCH for CSI reporting is configured in a particular cell, and in a case where the target PUCCH cell to be mapped at the CSI report timing is different from the particular cell, the PUCCH for CSI reporting need not be transmitted or may be dropped. Note that the target PUCCH cell may be a cell for actually transmitting the PUCCH.

For example, in a case where PUCCH for CSI reporting is configured in a particular cell, and in a case where the target PUCCH cell to be mapped at the CSI report timing is same as the particular cell, the PUCCH for CSI reporting may be transmitted.

For example, in a case where there are multiple CSI reports in the target PUCCH cell indicated by the PUCCH cell pattern, the 3GPP release 15/16 rules may be reused to determine the PUCCH for CSI reporting in the cell.

For example, the terminal 20 need not assume a case because of an error case in which the start timing and the end timing of PUCCH for CSI reporting are mapped to a cell different from the target PUCCH cell based on the PUCCH cell pattern, need not transmit the CSI report, or may drop the CSI report.

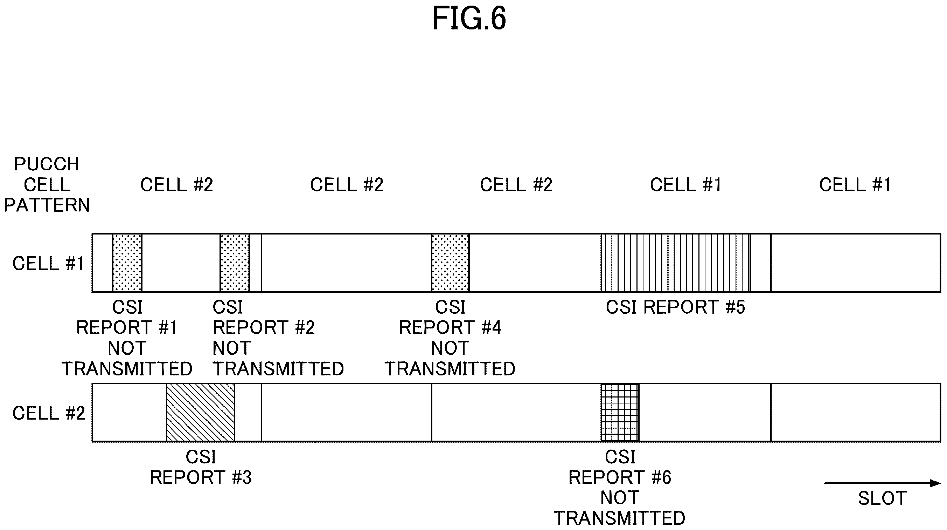

Fig. 6 is a drawing illustrating an example (2) of a CSI report according to an embodiment of the present invention. As shown in Fig. 6, in the slots in which cell #2 is specified by the PUCCH cell pattern, CSI report #1, CSI report #2 and CSI report #4 configured in cell #1 need not be transmitted or may be dropped. In the slot in which cell #2 is specified by the PUCCH cell pattern, CSI report #3 configured in cell #2 may be transmitted.

Also, as shown in Fig. 6, in the slot in which cell #1 is specified by the PUCCH cell pattern, CSI report #5 configured in cell #2 need not be transmitted or may be dropped. In the slot in which cell #1 is specified by the PUCCH cell pattern, CSI report #5 configured in cell #1 may be transmitted.

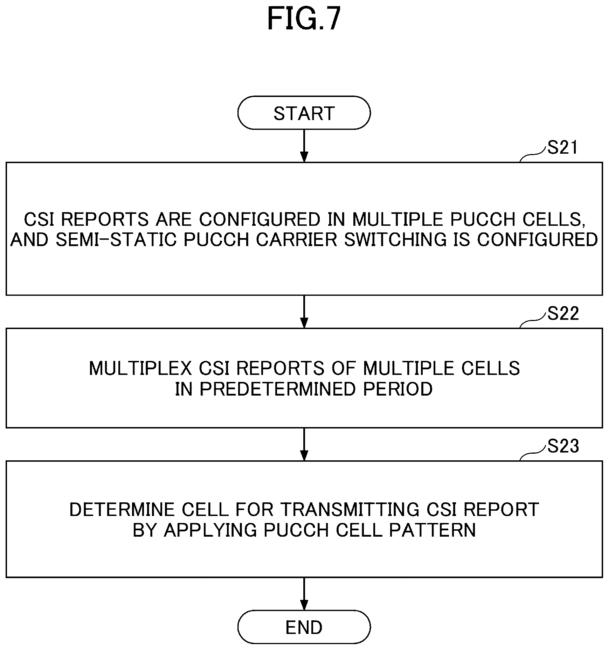

Fig. 7 is a flowchart illustrating an example (3) of a CSI report in an embodiment of the present invention. In step S21, in the terminal 20, CSI reporting is configured in multiple PUCCH cells and semi-static PUCCH carrier switching is configured. In subsequent step S22, the terminal 20 multiplexes CSI reports of multiple cells in a predetermined period. The predetermined period may be one slot, for example. In subsequent step S23, the terminal 20 applies the PUCCH cell pattern to determine a cell for transmitting the CSI report. That is, the CSI reports in different cells in a predetermined period may be first multiplexed, and then the PUCCH cell pattern may be applied to determine a cell for transmitting the multiplexed CSI reports.

The PUCCH resource for transmitting the multiplexed CSI reports may be selected from the multi-CSI-PUCCH-ResourceList. For example, the terminal 20 need not assume a case in which multi-CSI-PUCCH-ResourceList is not configured in the target PUCCH cell. Further, at the same time, the terminal 20 may multiplex all of the CSI reports of its own cell and other cells in the target PUCCH cell, and may transmit the multiplexed result.

For example, in a case where multi-CSI-PUCCH-ResourceList is not configured in the target PUCCH cell, the terminal 20 need not perform multiplexing in the target PUCCH cell, and need not transmit or may drop, the CSI reports of other cells.

The target PUCCH cell may be mapped to the current predetermined period. For example, the terminal 20 need not assume that multiple target PUCCH cells are mapped to the current predetermined period. Further, at the same time, the terminal 20 need not assume that CSI reporting is configured to two or more cells among the target PUCCH cells in the current predetermined period.

For example, in a case where multiple target PUCCH cells are mapped to the current predetermined period, the first or last target PUCCH cell may be mapped to the current predetermined period, the target PUCCH cell with the smallest or largest cell index may be mapped to the current predetermined period, or the target PUCCH cell to which the smallest or largest SCS is applied, may be mapped to the current predetermined period.

Also, in order to determine the target PUCCH cell, the terminal 20 does not have to assume that multiple target PUCCH cells are mapped to the current predetermined period. Further, at the same time, the terminal 20 does not have to assume that CSI reporting is configured to two or more cells among the target PUCCH cells in the current predetermined period.

In addition, in order to determine the target PUCCH cell, in a case where multiple target PUCCH cells are mapped to the current predetermined period, the first or last target PUCCH cell may be mapped to the current predetermined period, the target PUCCH cell with the smallest or largest cell index may be mapped to the current predetermined period, or the target PUCCH cell to which the smallest or largest SCS is applied, may be mapped to the current predetermined period.

The PUCCH resource for transmitting the multiplexed CSI reports may be selected from multi-CSI-PUCCH-ResourceList configured in the target PUCCH cell indicated by the PUCCH cell pattern.

For example, the method of transmitting CSI reports described in Fig. 6 may be applied to only a case in which CSI reports are present in the target PUCCH cell, and in a case where no CSI reports are present in the target PUCCH cell, CSI reports other than the target PUCCH cell need not be transmitted or may be dropped.

For example, the method of transmitting CSI reports described in Fig. 6 may be applied to only a case in which multi-CSI-PUCCH-ResourceList is configured in the target PUCCH cell.

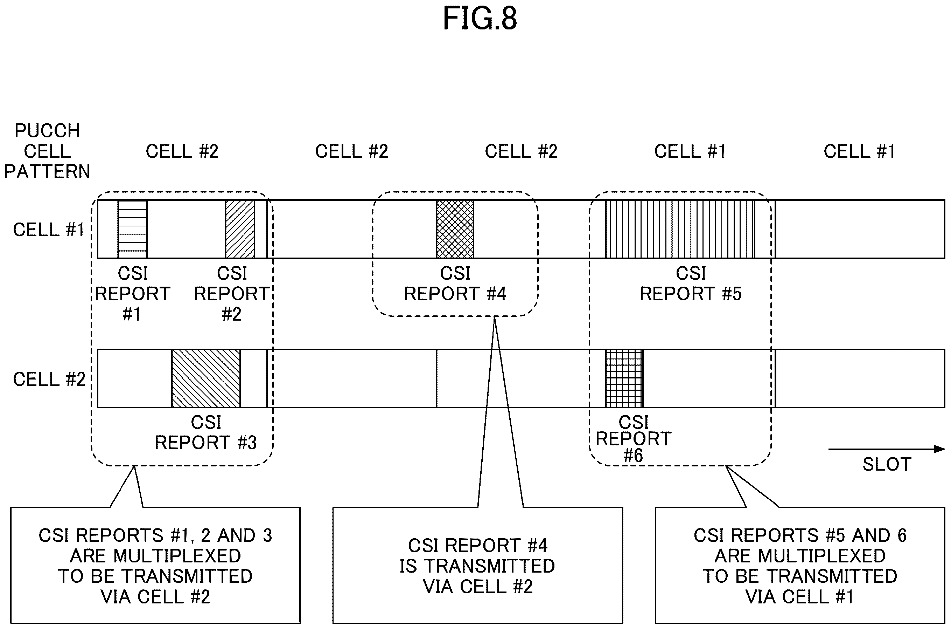

Fig. 8 is a drawing illustrating an example (4) of a CSI report according to an embodiment of the present invention. As shown in Fig. 8, CSI reports #1, #2 and #3 are multiplexed to be transmitted via cell #2, which is the target PUCCH cell. In addition, CSI report #4 is transmitted via cell #2, which is the target PUCCH cell. In addition, CSI reports #5 and #6 are multiplexed to be transmitted via cell #1, which is the target PUCCH cell.

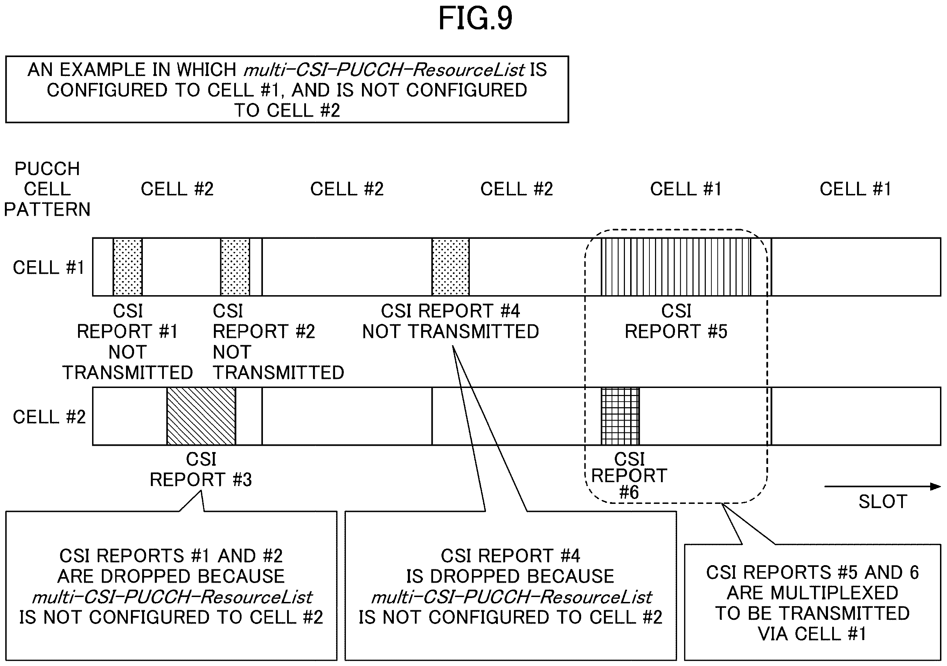

Fig. 9 is a drawing illustrating an example (5) of a CSI report according to an embodiment of the present invention. Fig. 9 shows an example in which multi-CSI-PUCCH-ResourceList is configured to cell #1 but not configured to cell #2. As shown in Fig. 9, because multi-CSI-PUCCH-ResourceList is not configured to cell #2, which is the target PUCCH cell, CSI reports #1 and #2 are not transmitted, and CSI report #3 alone is transmitted. Also, because multi-CSI-PUCCH-ResourceList is not configured to cell #2, which is the target PUCCH cell, CSI report #4 is not transmitted. Also, because multi-CSI-PUCCH-ResourceList is configured to cell #1, which is the target PUCCH cell, CSI reports #5 and #6 are multiplexed to be transmitted via cell #1.

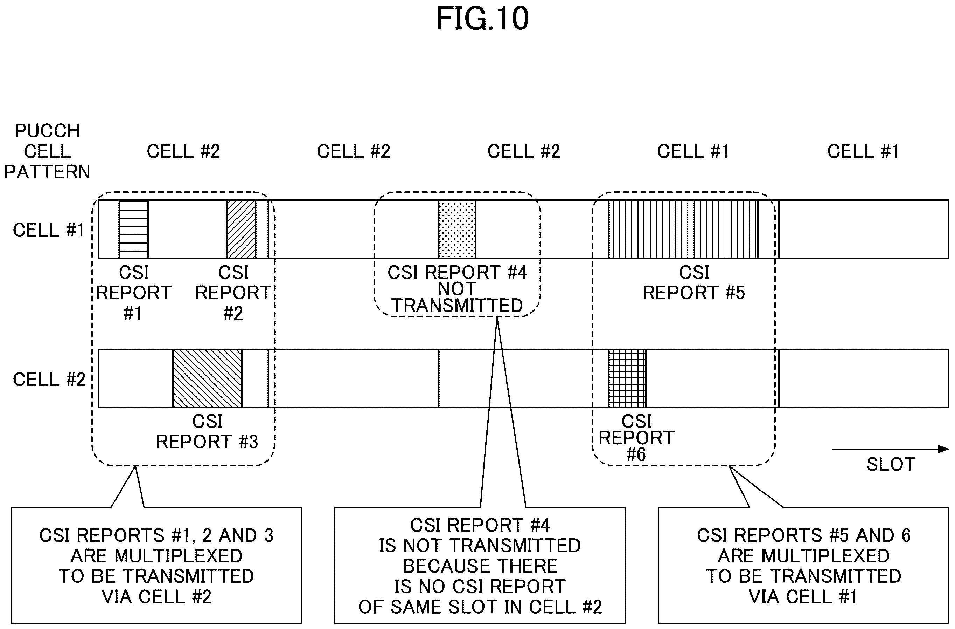

Fig. 10 is a drawing illustrating an example (6) of a CSI report according to an embodiment of the present invention. In Fig. 10, the method described in Fig. 7 may be applied only in a case where there is a CSI report in the target PUCCH cell in a predetermined period. In a case where there is no CSI report in the target PUCCH cell in a predetermined period, CSI reports in other cells need not be transmitted. For example, the CSI reports of other cells and the CSI report of the own cell may be multiplexed to be transmitted only in a case where there is a CSI report in the target PUCCH cell in a predetermined period.

As shown in Fig. 9, because CSI report #3 is present in cell #2, which is the target PUCCH cell, CSI reports #1, #2 and #3 are multiplexed to be transmitted via cell #2. Also, because there is no CSI report in cell #2, which is the target PUCCH cell, CSI report #4 is not transmitted. Because CSI report #5 is present in cell #1, which is the target PUCCH cell, CSI reports #5 and #6 are multiplexed to be transmitted via cell #1.

Here, the predetermined period may be a period of one slot in the reference cell or a period of a slot group. For example, the reference cell or the predetermined period may be determined as shown in 1) -5) below.

1) The reference cell may be a cell used to define the PUCCH cell pattern.
2) The fixed absolute period (e.g., 1 ms) that is defined by RRC signaling or by technical specifications, may be the predetermined time.
3) The reference cell may be a default cell such as, PCell, PSCell, PUCCH-SCell.
4) The reference cell may be a cell configured by RRC signaling.
5) Among all of PUCCH cells or all of PUCCH cells for which CSI reporting by PUCCH is configured, the reference cell may be a cell to which the maximum or minimum SCS is applied, or a cell with the maximum or minimum cell index.

Hereinafter, a case will be described in which CSI reporting is configured in multiple PUCCH cells and PUCCH carrier switching is not configured.

The terminal 20 need not assume a case because of an error case in which CSI reporting is configured in multiple PUCCH cells and PUCCH carrier switching is not configured.

Also, in a case where CSI reports are configured in multiple PUCCH cells and PUCCH carrier switching is not configured, the terminal 20 may transmit the multiple CSI reports in only one PUCCH cell in the predetermined period.

For example, the terminal 20 need not assume that multiple CSI reports are to be configured in a predetermined period. The configuration of multiple CSI reports in a predetermined period may be avoided by an appropriate CSI report configuration in different PUCCH cells. The method related to PUCCH for transmitting CSI reports in 3GPP release 15/16, may be reused.

For example, the configuration of multiple CSI reports in a predetermined period, may be allowed.
For example, in a case where multiple CSI reports are configured in a predetermined period, the terminal 20 may transmit any one of CSI reports and need not transmit other CSI reports.

In addition, for example, in a case where multiple CSI reports are configured in a predetermined period, the terminal 20 may multiplex the multiple CSI reports, and transmit the multiplexed result in one cell. For example, the terminal 20 may assume that multi-CSI-PUCCH-ResourceList is to be configured in at least one of the multiple PUCCH cells in which CSI reporting is configured. Also, in a case where multi-CSI-PUCCH-ResourceList is not configured in any of the multiple PUCCH cells in which CSI reports are configured, the terminal 20 need not transmit all of the CSI reports, or may transmit one of the CSI reports and need not transmit the other CSI reports.

In addition, for example, in a case where multiple CSI reports are configured in a predetermined period, the terminal 20 may transmit the multiple CSI reports via two or more PUCCH cells.

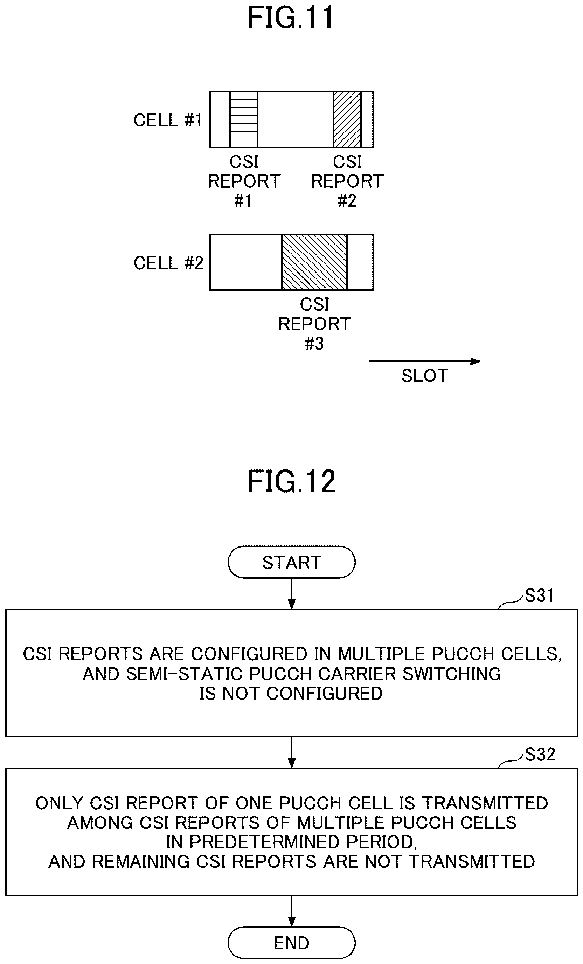

Fig. 11 is a drawing illustrating an example (7) of a CSI report according to an embodiment of the present invention. As shown in Fig. 11, the terminal 20 need not assume a case in which, for example, in a certain slot, there are CSI reports #1 and #2 in cell #1 and CSI report #3 in cell #2. Also, for example, in a slot, in a case where there are CSI reports #1 and #2 in cell #1 and CSI report #3 in cell #2, the terminal 20 may determine one of the cells to be the cell for transmitting the PUCCH of the CSI report. Also, for example, in a slot, in a case where there are CSI reports #1 and #2 in cell #1 and CSI report #3 in cell #2, the terminal 20 may transmit the CSI reports via PUCCH in multiple cells, for example, may transmit the CSI reports via PUCCH in 3 cells, or may transmit the CSI reports via a part of the PUCCH cells.

Fig. 12 is a flowchart illustrating an example (8) of a CSI report in an embodiment of the present invention. In step S31, in the terminal 20, CSI reporting is configured in multiple PUCCH cells and semi-static PUCCH carrier switching is configured. In subsequent step S32, the terminal 20 transmits only the CSI report of one PUCCH cell among the CSI reports of the multiple PUCCH cells in a predetermined period, and thus does not transmit the remaining CSI reports.

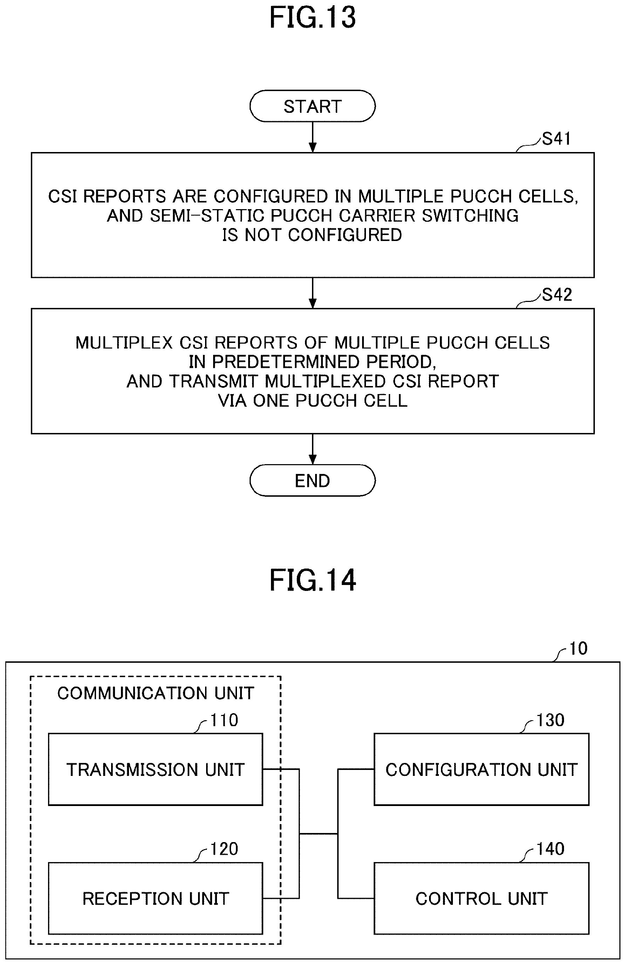

Fig. 13 is a flowchart illustrating an example (9) of a CSI report in an embodiment of the present invention. In step S41, in the terminal 20, CSI reporting is configured in multiple PUCCH cells and semi-static PUCCH carrier switching is configured. In subsequent step S42, the terminal 20 multiplexes the CSI reports of the multiple PUCCH cells in a predetermined period, and transmit the multiplexed CSI reports via one PUCCH cell.

In a case where CSI reports are configured in multiple PUCCH cells and PUCCH carrier switching is not configured, with respect to the terminal 20, the CSI report may be transmitted via only one PUCCH cell in a predetermined period and the CSI reports of other PUCCH cells need not be transmitted. In addition, the operations described below may be performed.

The rules in 3GPP release 15/16 may be reused to determine which CSI report is to be transmitted and which PUCCH resource is to be used in a PUCCH cell when the PUCCH cell is determined to transmit the PUCCH of the CSI report.

The PUCCH cell for CSI reporting may be determined as shown in Alt1) and Alt2) below.

### Alt1) Determined based on CSI reports

Alt1-1) A predetermined CSI report may be selected as indicated below in Alt1-1A) - Alt1-1F).
Alt1-1A) A CSI report in which the highest priority is configured among CSI reports in multiple cells in a predetermined period. The priority may be determined by reusing the rules of 3GPP Release 15/16, or may be determined by a new rule based on the PUCCH cell index.
Alt1-1B) Any CSI report in which the start position or the end position is a head or an end, respectively, among CSI reports in multiple cells in a predetermined period.
Alt1-1C) A CSI report in which the length of the PUCCH is the longest or the shortest among CSI reports in multiple cells in a predetermined period.
Alt1-1D) A CSI report with the longest or shortest CSI reporting cycle among CSI reports in multiple cells in a predetermined period.
Alt1-1E) A CSI report having a specific size and/or a specific PUCCH format among CSI reports in multiple cells in a predetermined period.
Alt1-1F) A CSI report having a maximum or minimum UCI payload size among CSI reports in multiple cells in a predetermined period.

### Alt2) Determine based on characteristics or configurations of cells

Alt2-1) CSI reporting of a cell having a maximum or minimum cell SCS and/or a cell having a minimum or maximum cell index among multiple PUCCH cells in which CSI reporting is present in a predetermined period.
Alt2-2) CSI reporting of PCell, PSCell or PUCCH-SCell among multiple PUCCH cells in which CSI reporting is present in a predetermined period. Note that in a case where the multiple cells do not include Pcell, PSCell, or PUCCH-SCell, Alt1), Alt2-1), Alt2-3), Alt2-4), or Alt2-5) may be applied, or all of the CSI reports need not be transmitted. Note that PCell, PSCell, or PUCCH-SCell may be replaced with another cell such as a cell configured by RRC signaling.

Alt2-3) CSI reporting of a PUCCH cell in which PUCCH transmission is dynamically indicated, among multiple PUCCH cells in which CSI reporting is present in a predetermined period. For example, CSI reporting of the target PUCCH cell reporting HARQ-ACK associated with DCI.
Alt2-3A) The terminal 20 need not assume a PUCCH cell in which PUCCH transmission is dynamically indicated, in multiple PUCCH cells in which CSI reporting is present in a predetermined period. Furthermore, the terminal 20 need not assume CSI reporting in multiple PUCCH cells in which PUCCH transmission is dynamically indicated.
Alt2-3B) CSI reporting: in a PUCCH cell in which PUCCH transmission is first or last among the PUCCH cells; in a PUCCH cell in which a cell index is minimum or maximum; or in a PUCCH cell in which SCS is minimum or maximum, in a case where there are multiple PUCCH cells in which PUCCH transmission is dynamically indicated, among multiple PUCCH cells in which CSI reporting is present in a predetermined period,
Alt2-3C) In a case where there is no CSI report in a PUCCH cell in which PUCCH transmission in a predetermined period is dynamically indicated, Alt1), Alt2-2), Alt2-4), Alt2-5) may be applied or all CSI reports need not be transmitted.

Alt2-4) A cell in which multi-CSI-PUCCH-ResourceList is configured among multiple PUCCH cells in which CSI reporting is present in a predetermined period. In a case where there is no PUCCH cell in which multi-CSI-PUCCH-ResourceList is configured, Alt1), Alt2-2), Alt2-3), and Alt2-5) may be applied or all CSI reports need not be transmitted. In addition, in a case where there are multiple cells in which multi-CSI-PUCCH-ResourceList is configured among multiple PUCCH cells in which CSI reports are present in a predetermined period, one PUCCH cell may be selected by applying Alt1), Alt2-2), Alt2-3), and Alt2-5), or all CSI reports need not be transmitted.

Alt2-5) A list defining an order of PUCCH cells for CSI reporting, may be configured by RRC signaling, and one PUCCH cell for CSI reporting may be selected from multiple PUCCH cells in which CSI reporting is present in a predetermined period, based on the order.

In a case where CSI reporting is configured in multiple PUCCH cells and PUCCH carrier switching is not configured, the terminal 20 may multiplex multiple CSI reports in a predetermined period into one CSI report, and then transmit the CSI report in the one PUCCH cell. In addition, the following operations may be performed.

Operation 1) The PUCCH cell for transmitting the multiplexed CSI reports may be determined based on Alt1), Alt2-1), Alt2-2), Alt2-3), Alt2-4) or Alt2-5). Also, a PUCCH cell in which multiple CSI reports are configured in a predetermined period may be replaced with a PUCCH cell in which a CSI report is configured. Also, even in a case where there is no CSI report in PCell, PSCell, PUCCH-SCell, or a cell configured by RRC signaling in a predetermined period, the terminal 20 may transmit the multiplexed CSI reports in PCell, PSCell, PUCCH-SCell, or the cell configured by RRC signaling.

Case 1-1) After a PUCCH cell for transmitting the multiplexed CSI reports is determined, in a case where multi-CSI-PUCCH-ResourceList is configured in the PUCCH cell, the multiplexed CSI reports may be transmitted via the PUCCH cell.
Case 1-2) After a PUCCH cell for transmitting the multiplexed CSI reports is determined, in a case where multi-CSI-PUCCH-ResourceList is not configured in the PUCCH cell, it may be an error case, all the CSI reports in a predetermined period need not be transmitted, or a fallback operation may be performed in which the CSI report of the one PUCCH cell determined by the above-described method among the CSI reports in the predetermined period is transmitted and the CSI reports of other PUCCH cells are not transmitted.

Operation 2) A cell for transmitting a CSI report may be determined by taking into account multi-CSI-PUCCH-ResourceList.

Case 2-1) In a case where multi-CSI-PUCCH-ResourceList is configured in only one cell among multiple PUCCH cells in which CSI reports are configured in a predetermined period, the multiplexed CSI reports may be transmitted via the one cell. Also, in a case where multi-CSI-PUCCH-ResourceList is configured in only one cell among multiple PUCCHs in which CSI reports are configured, the multiplexed CSI reports may be transmitted via the one cell.

Case 2-2) In a case where multi-CSI-PUCCH-ResourceList is not configured in any cell among multiple PUCCH cells in which CSI report are configured in a predetermined period, all the CSI reports need not be transmitted, or a fallback operation may be performed in which the CSI report of the one PUCCH cell determined by the above-described method among the CSI reports in the predetermined period is transmitted, and the CSI reports of other PUCCH cells are not transmitted.

Case 2-3) In a case where multi-CSI-PUCCH-ResourceList is configured in multiple cells among multiple PUCCH cells in which a CSI reports are configured in a predetermined period, a cell for transmitting the multiplexed CSI reports may be determined as shown in operation 1). Furthermore, the CSI report and the PUCCH cell may be limited to the PUCCH cell in which multi-CSI-PUCCH-ResourceList is configured.

In operation 1) and operation 2), in a case where a PUCCH cell for transmitting the multiplexed CSI reports is determined and multi-CSI-PUCCH-ResourceList is configured in the determined PUCCH cell, the multiplexing and the transmission may be performed in the PUCCH cell as described below.

The terminal 20 may multiplex all of the CSI reports in a predetermined period ant transmit the multiplexed result, or may multiplex a number of CSI reports not exceeding X among the CSI reports in a predetermined period and transmit the multiplexed result. In a case where the number of CSI reports not exceeding X among the CSI reports in a predetermined period are multiplexed to be transmitted, the X CSI reports may be determined based on at least one of the priority of the CSI report, the first or last CSI report of the start position or end position, the longest or shortest PUCCH length, the longest or shortest CSI report cycle, the report size, the PUCCH format, and the maximum or minimum UCI payload size. The value of X may be configured by RRC signaling or may be defined in the technical specification.

The terminal 20 need not assume that multiple slots for transmitting the CSI multiplexed in the PUCCH cell overlap with each other in a predetermined period. Also, in a case where multiple slots for transmitting CSI multiplexed in the PUCCH cell overlap with each other, the first or last slot may be selected to perform transmission in a predetermined period, or the first or last slot for transmitting a CSI report in the cell may be selected to perform transmission in a predetermined period, or the first or last slot overlapping the CSI report whose start position or end position is the first or last position may be selected to perform transmission among PUCCHs in which all CSIs are configured in a predetermined period.

The PUCCH resource may be selected from multi-CSI-PUCCH-ResourceList configured in the determined PUCCH cell.

Hereinafter, an operation in a case where CSI reports are transmitted via two or more PUCCH cells in a predetermined period will be described.

The limitation related to the CSI report transmitted via multiple PUCCH cells may be a limitation indicated in 1) or 2) below.

1) CSI reporting may be free from additional limitations. That is, the limitations of CSI reporting in a cell of 3GPP Release 15/16 may be applied. For example, the limitations in 3GPP Release 15/16 may be up to two non-overlapping CSI reports transmitted in one slot in one cell. Furthermore, in a case where there are two overlapping CSI reports in a slot, at least one CSI report may be transmitted by PUCCH format 2.
2) The CSI reporting may be subject to additional limitations. For example, some or all of the following limitations 1) to 7) may be applied.

Limitation 1) Among CSI reports transmitted via multiple PUCCH cells in a predetermined period, up to X (X is 1 or more) non-overlapping CSI reports may be transmitted.
Limitation 2) Among CSI reports transmitted via multiple PUCCH cells in a predetermined period, up to Y (Y is 1 or more) CSI reports in the PUCCH cells may be transmitted.
Limitation 3) Among CSI reports transmitted via one PUCCH cell in a predetermined period, up to Z (Z is 1 or more) non-overlapping CSI reports may be transmitted.
Limitation 4) Among X' (X' is X or less) CSI reports transmitted via multiple PUCCH cells in a predetermined period, at least or at most M (M is 1 or more and is X' or less) CSI reports may be transmitted by PUCCH format 2.
Limitation 5) Among Z' (Z' is less than or equal to Z) CSI reports transmitted via one PUCCH cell in a predetermined period, at least or at most N (N is greater than or equal to 1 and less than or equal to Z') CSI reports may be transmitted via the PUCCH cell by PUCCH format 2.
Limitation 6) Among X" (X" is equal to or less than X) CSI reports transmitted multiple PUCCH cells in a predetermined period, at least or at most M' (M' is equal to or greater than 1 and equal to or less than X") CSI reports may be transmitted by PUCCH format 3 or 4.
Limitation 7) Among Z" (Z" is less than or equal to Z) CSI reports transmitted via one PUCCH cell in a predetermined period, at least or at most N' (N' is greater than or equal to 1 and less than or equal to Z") CSI reports may be transmitted via the PUCCH cell by PUCCH format 3 or 4.

The values of X, X', X", Y, Z, Z', Z", M, M', N, and N' may be defined in the technical specification or configured by RRC signaling. Each value may be defined or configured independently, or may be defined or configured dependently.

Multiple CSI reports in multiple PUCCH cells may be processed as described below.

Option 2-1) The terminal 20 may perform processing in two steps. The intra-cell CSI-PUCCHs may be processed first and the inter-cell CSI-PUCCHs may be processed second.
Step 1) The CSI-PUCCH of each cell is processed according to the 3GPP Release 15/16 rules.
Step 2) The inter-cell CSI-PUCCHs are processed. For example, in a case where the CSI reports do not overlap with each other, up to two non-overlapping CSI reports may be input in one slot in one PUCCH cell at least with respect to PUCCH format 2.
Case 1) In a case where CSI reports do not overlap between PUCCH cells in a predetermined period, the CSI reports may be separately transmitted via each PUCCH cell and no further limitation need be applied. Also, in a case where the CSI reports do not overlap between PUCCH cells, the above-described limitations 1) to 7) may be applied to the CSI reports. Processing related to inter-cell CSI reporting will be described later.
Case 2) In a case where the CSI reports overlap between PUCCH cells in a predetermined period, and where multi-CSI-PUCCH-ResourceList is configured in at least one PUCCH cell among the PUCCH cell or PUCCH cells in which CSI reporting is configured to the PUCCH, the terminal 20 may multiplex CSI reports between multiple cells into one CSI report, and then transmit the CSI report in one PUCCH cell by the above-described method. Also, in a case where multi-CSI-PUCCH-ResourceList is not configured in any PUCCH cell, the inter-cell CSI report processing method described later may be applied.

Option 2-2) The terminal 20 may process CSI reports between PUCCH cells in one step. More than two overlapping or non-overlapping CSI reports may be assumed in one slot of one PUCCH cell.
Case 1) In a case where CSI reports do not overlap within the PUCCH cell and between PUCCH cells in a predetermined period, the CSI reports may be separately transmitted via each PUCCH cell and no further limitation need be applied. Also, in a case where the CSI reports do not overlap between PUCCH cells, the above-described limitations 1) to 7) may be applied to the CSI reports. Processing related to inter-cell CSI reporting will be described later.
Case 2) In a case where the CSI reports overlap between PUCCH cells in a predetermined period, and where multi-CSI-PUCCH-ResourceList is configured in at least one PUCCH cell among the PUCCH cell or PUCCH cells in which CSI reporting is configured to the PUCCH, the terminal 20 may multiplex CSI reports between multiple cells into one CSI report, and then transmit the CSI report in one PUCCH cell by the above-described method. Also, in a case where multi-CSI-PUCCH-ResourceList is not configured in any PUCCH cell, the inter-cell CSI report processing method described later may be applied.

Processing related to CSI reporting between multiple PUCCH cells in a predetermined period may be performed as shown in the following 1) to 3).

1) CSI reporting among multiple PUCCH cells in a predetermined period may be processed based on a priority of the CSI reporting. For example, the following steps A) to D) may be performed.
   Step A) C(i) is a set of inter-cell CSI reports. S(j) is a set of selected CSI reports, and is null.
   Step B) Select a CSI report configured with the highest priority among the inter-cell CSI reports as a first CSI report. Here, C(i) may include multiplexed CSI reports. In a case where CSI reports in a cell are multiplexed, the highest or lowest priority among the multiplexed CSI reports may be configured to the multiplexed CSI report, or the highest or lowest priority may always be configured to the multiplexed CSI reports.
   Step C) Exclude the first CSI report from C(i) and add it to S(j).
   Step D) In a case where the maximum number of CSI reports between PUCCH cells is not exceeded (for example, the limitation according to Limitation 1)), where the maximum number of PUCCH cells is not exceeded (for example, the limitation according to Limitation 2)), and where there are remaining CSI reports in C(i), the following steps D1 to D3 may be looped.

Step D1) Exclude from C(i): a CSI report overlapping with CSI reports included in S(j); or a CSI report in the same cell as the CSI reports included in S(j) by applying limitation 3) above; or a CSI report of a specific PUCCH format by applying limitations 4), 5), 6), and 7) above.
Step D2) Select a CSI report configured with the highest priority among the CSI reports included in the remaining C(i). Step D3) Exclude the selected CSI report from C(i) and add it to S(j).

2) CSI reports among multiple PUCCH cells in a predetermined period may be processed based on a PUCCH cell order. The PUCCH cell order is an order of PUCCH cells for transmitting CSI reports, configured by RRC signaling. For example, PCell, PSCell, and PUCCH-SCell may be the first, and SCell #1 may be the second. For example, the following steps A) to D) may be performed.
Step A) C(i) is a set of inter-cell CSI reports. S(j) is a set of selected CSI reports, and is null.
Step B) Select a PUCCH cell configured with a smallest or largest index in the PUCCH cell order among the inter-cell CSI reports.
Step C) Exclude the CSI report in the selected PUCCH cell from C(i) and add it to S(j). Here, in order to determine the CSI report in the selected PUCCH cell, the rules of 3GPP Release 15/16 may be applied, and the limitation of the above-mentioned limitation 3) of Release 17 related to the number of CSI reports per cell, may be further applied. The CSI report determined in the selected PUCCH cell may be added to S(j) and all CSI reports in the selected PUCCH cell may be excluded.
Step D) In a case where the maximum number of CSI reports between PUCCH cells is not exceeded (for example, the limitation according to Limitation 1)), where the maximum number of PUCCH cells is not exceeded (for example, the limitation according to Limitation 2)), and where there are remaining CSI reports in C(i), the following steps D1 to D3 may be looped.

Step D1) Exclude from C(i): a CSI report overlapping with CSI reports included in S(j); or a CSI report in the same cell as the CSI reports included in S(j) by applying limitation 3) above; or a CSI report of a specific PUCCH format by applying limitations 4), 5), 6), and 7) above.
Step D2) Select a CSI report in the PUCCH cell configured with the smallest or largest index of the PUCCH cell order from among CSI reports included in the remaining C(i).
Step D3) Exclude the selected CSI report from C(i) and add it to S(j). Here, in order to determine the CSI report in the selected PUCCH cell, the rules of 3GPP Release 15/16 may be applied, and the limitation of the above-mentioned limitation 3) of Release 17 related to the number of CSI reports per cell, may be further applied. In a case where the limitation 1) is not exceeded, the CSI report determined in the selected PUCCH cell may be added to S(j). In a case where the limitation 1) is exceeded, a CSI report configured with a higher priority among the determined CSI reports may be added to S(j) so as not to exceed the limitation 1). Also, all CSIs in the selected PUCCH cell may be excluded from C(i).

3) CSI reporting among multiple PUCCH cells in a predetermined period may be processed based on a priority of the CSI report and the PUCCH cell. For example, the following steps A) to D) may be performed.
Step A) C(i) is a set of inter-cell CSI reports. S(j) is a set of selected CSI reports, and is null.
Step B) Select a CSI report configured with the smallest or largest index of the PUCCH cell order as a first CSI report among the inter-cell CSI reports. Here, C(i) may include multiplexed CSI reports. In a case where CSI reports in a cell are multiplexed, the highest or lowest priority among the multiplexed CSI reports may be configured to the multiplexed CSI report, or the highest or lowest priority may always be configured to the multiplexed CSI reports.
Step C) Exclude the first CSI report and CSI reports in the same cell as the first CSI report from C(i) and add them to S(j). Here, in order to determine the CSI report in the selected PUCCH cell, the rules of 3GPP Release 15/16 may be applied, and the limitation of the above-mentioned limitation 3) of Release 17 related to the number of CSI reports per cell, may be further applied. The CSI report determined as the first CSI report may be added to S(j), and all CSI reports in the cell of the first CSI report may be excluded.
Step D) In a case where the maximum number of CSI reports between PUCCH cells is not exceeded (for example, the limitation according to Limitation 1)), where the maximum number of PUCCH cells is not exceeded (for example, the limitation according to Limitation 2)), and where there are remaining CSI reports in C(i), the following steps D1 to D3 may be looped.

Step D1) Exclude from C(i): a CSI report overlapping with CSI reports included in S(j); or a CSI report in the same cell as the CSI reports included in S(j) by applying limitation 3) above; or a CSI report of a specific PUCCH format by applying limitations 4), 5), 6), and 7) above.
Step D2) Select a CSI report in the PUCCH cell configured with the highest priority from among the CSI reports included in the remaining C(i).
Step D3) Exclude the selected CSI report from C(i) and add it to S(j). Here, in order to determine the CSI report in the selected PUCCH cell, the rules of 3GPP Release 15/16 may be applied, and the limitation of the above-mentioned limitation 3) of Release 17 related to the number of CSI reports per cell, may be further applied. In a case where the limitation 1) is not exceeded, the CSI report determined in the selected PUCCH cell may be added to S(j). In a case where the limitation 1) is exceeded, a CSI report configured with a higher priority among the determined CSI reports may be added to S(j) so as not to exceed the limitation 1). Also, all CSIs in the selected PUCCH cell may be excluded from C(i).

Which procedure of the above-described CSI reporting is to be performed may be configured by a higher layer parameter. In addition, which procedure of the above-described CSI reporting is to be performed may be reported as UE capability. In addition, which procedure of the above-described CSI reporting is to be performed may be specified by technical specifications. In addition, which procedure of the above-described CSI reporting is to be performed may be determined based on the configuration by the higher layer parameter and the UE capability report.

The rules of 3GPP Release 15/16 may be applied to the priority related to the CSI, or a new priority related to the CSI may be introduced by taking into account the PUCCH cell index.

Note that the UE capabilities of 1)-6) shown below may be defined.

1) Whether semi-static PUCCH carrier switching is supported or not
2) Whether a PUCCH configuration for performing CSI reporting in multiple cells is supported or not.
3) Whether multiplexing of CSI reports in different cells is supported or not.

According to the above-described embodiment, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report.

That is, it is possible to clarify a procedure for reporting CSI (Channel State Information) in a wireless communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

Fig. 14 is a diagram illustrating an example of a functional configuration of the base station 10. As shown in Fig. 14, the base station 10 includes a transmission unit 110, a reception unit 120, a configuration unit 130, and a control unit 140. The functional structure illustrated in Fig. 14 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage device and reads the preset configuration information from the storage device if necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

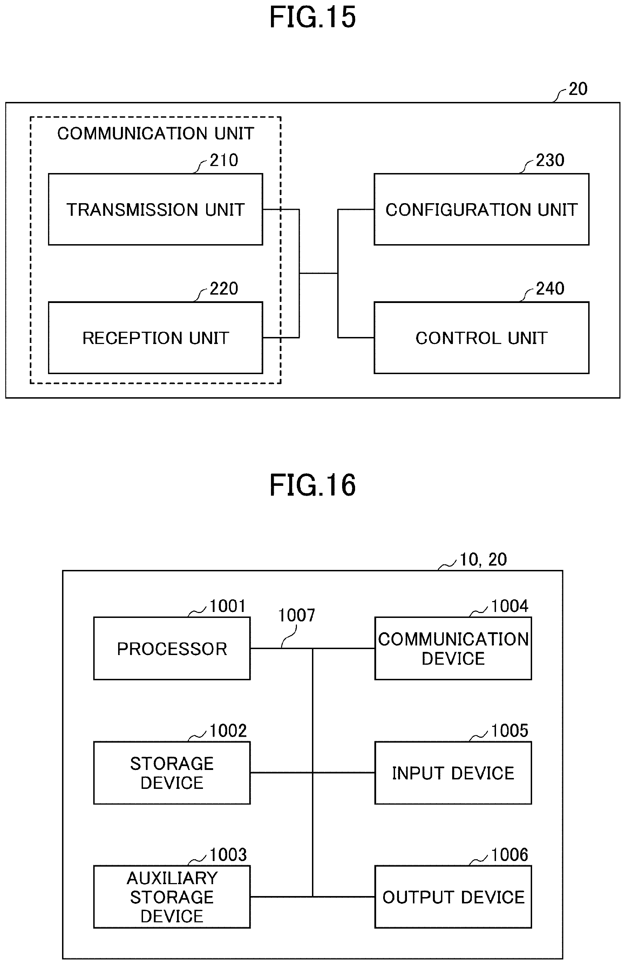

Fig. 15 is a diagram illustrating an example of a functional configuration of the terminal 20. As shown in FIG. 15, the terminal 20 includes a transmission unit 210, a reception unit 220, a configuration unit 230, and a control unit 240. The functional structure illustrated in Fig. 15 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above functional structure diagrams used for describing an embodiment of the present invention (Fig. 14 and Fig. 15), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the base station 10, terminal 20, etc., according to an embodiment of the present disclosure may function as a computer for processing the radio communication method of the present disclosure. Fig. 16 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004 to the storage device 1002, and performs various processes according to the program, the software module, or the data. As the program, a program is used that causes the computer to perform at least a part of operations according to an embodiment of the present invention described above. For example, the control unit 140 of the base station 10 illustrated in Fig. 14 may be realized by control programs that are stored in the storage device 1002 and are executed by the processor 1001. Further, for example, the control unit 240 of the terminal 20 illustrated in Fig. 15 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

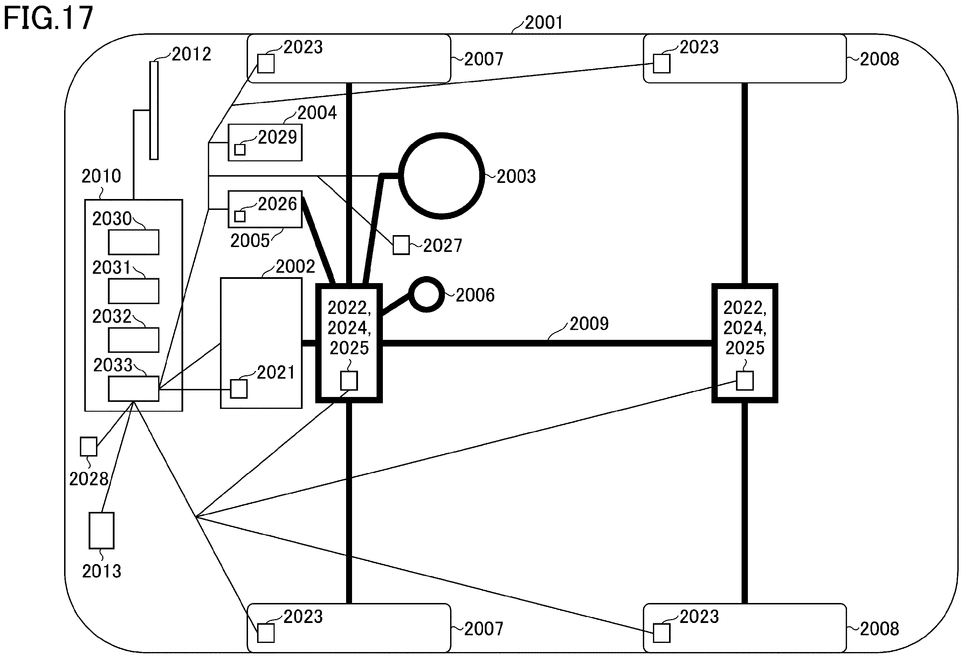

Fig. 17 shows an example of a configuration of a vehicle 2001. As shown in Fig. 17, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on signal acquired by an accelerator pedal sensor 2029, a brake pedal stepped-on signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the accelerator pedal stepped-on signal acquired by the accelerator pedal sensor 2029, the brake pedal stepped-on signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Embodiment summary)

As described above, according to the embodiments of the present invention, a terminal is provided. The terminal includes: a control unit configured to determine a CSI report to be transmitted, based on an order to be applied to carrier switching that is to be applied to a channel carrying uplink control information, among respective CSI (Channel State Information) reports in a plurality of cells, and to determine a cell for transmitting the determined CSI report; and a transmission unit configured to transmit the determined CSI report in the determined cell.

According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report. That is, it is possible to clarify a procedure for reporting CSI (Channel State Information) in a wireless communication system.

The control unit may firstly determine a cell for transmitting a CSI report by applying the carrier switching, and secondly determine that a CSI report in the determined cell is to be transmitted. According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report.

The control unit may firstly determine that at least a part of the respective CSI reports in a particular period is to be multiplexed to be transmitted, and secondly determine a cell for transmitting the multiplexed CSI reports by applying the carrier switching. According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report.

The control unit may determine a cell for transmitting a CSI report by selecting a cell to which a resource list of uplink control information channels for transmitting a CSI report is configured. According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report.

The control unit need not transmit the multiplexed CSI reports in a case where there is no CSI report present in the determined cell. According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report.

Further, according to the embodiments of the present invention, a communication method performed by a terminal is provided. The communication method includes: determining a CSI report to be transmitted, based on an order to be applied to carrier switching that is to be applied to a channel carrying uplink control information, among respective CSI (Channel State Information) reports in a plurality of cells, and determining a cell for transmitting the determined CSI report; and transmitting the determined CSI report in the determined cell.

According to the above configuration, when transmitting multiple pieces of CSI, the terminal 20 is enabled to determine a CSI report to be transmitted based on a condition related to PUCCH carrier switching and a condition related to CSI reporting, and is enabled to determine a cell for transmitting the determined CSI report. That is, it is possible to clarify a procedure for reporting CSI (Channel State Information) in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication device, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present application is based on and claims priority to Japanese patent application No. 2021-170988 filed on October 19, 2021, the entire of which are hereby incorporated herein by reference.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to determine a CSI report to be transmitted, based on an order to be applied to carrier switching that is to be applied to a channel carrying uplink control information, among respective CSI (Channel State Information) reports in a plurality of cells, and to determine a cell for transmitting the determined CSI report; and
a transmission unit configured to transmit the determined CSI report in the determined cell.

2. The terminal as claimed in claim 1, wherein the control unit firstly determines a cell for transmitting a CSI report by applying the carrier switching, and secondly determines that a CSI report in the determined cell is to be transmitted.

3. The terminal as claimed in claim 1, wherein the control unit firstly determines that at least a part of the respective CSI reports in a particular period is to be multiplexed to be transmitted, and secondly determines a cell for transmitting the multiplexed CSI reports by applying the carrier switching.

4. The terminal as claimed in claim 3, wherein the control unit determines a cell for transmitting a CSI report by selecting a cell to which a resource list of uplink control information channels for transmitting a CSI report is configured.

5. The terminal as claimed in claim 3, wherein the control unit does not transmit the multiplexed CSI reports in a case where there is no CSI report in the determined cell.

6. A communication method performed by a terminal, the communication method comprising:
determining a CSI report to be transmitted, based on an order to be applied to carrier switching that is to be applied to a channel carrying uplink control information, among respective CSI (Channel State Information) reports in a plurality of cells, and determining a cell for transmitting the determined CSI report; and
transmitting the determined CSI report in the determined cell.
